# EUROPÄISCHE PATENTANMELDUNG

(11) **EP 1 146 753 A1**
(43) Veröffentlichungstag der Anmeldung: **17.10.2001**
(21) Anmeldenummer: 00107711.4
(22) Anmeldetag: 10.04.2000
(51) Int. Cl.: H04Q 7/22, H04L 29/08, G06F 17/30

(54) **WAP-WEB-Software-Agent**

(71) Anmelder: SIEMENS AKTIENGESELLSCHAFT, 80333 München (DE)
(72) Erfinder: Fischer, Karl, 1140 Wien (AT); Neubauer, Kurt Ferdinand, 1180 Wien (AT); Antal, Imre, 2125 Streifing (AT); Klambauer, Florian, 1140 Wien (AT)

(57) **Zusammenfassung**

Die Erfindung bezieht sich auf ein Verfahren zum Bereitstellen von Daten beim Abruf von Informationen aus einem Kommunikationssystem und entsprechende Einrichtungen (MS, PC) eines solchen Kommunikationssystems. Dabei fordert eine Station (MS, PC) aufgrund einer Teilnehmer-Anforderung mittels einer Anweisung aus dem Kommunikationssystem zumindest eine Informationen an, eine Systemeinrichtung zum Verarbeiten von Anweisungen stellt Daten, die der Anforderung entsprechen, bereit und die Station macht die bereitgestellten Daten dem Teilnehmer in einer Antwort verfügbar.

Zur Verringerung des Aufwands bei voneinander abhängenden Abfrageketten ruft die Systemeinrichtung (WWSA) zum Verarbeiten von Anweisungen nach dem Empfang der Anweisung in zwei oder mehr Abläufen jeweils einen Teil der entsprechenden Daten ab, wertet diese jeweils aus und ruft danach entsprechend dem Ergebnis der Auswertung weitere Daten ab, bis die angeforderte Information bereitstellbar ist.

## Beschreibung

Die Erfindung bezieht sich auf ein Verfahren zum Bereitstellen von Daten beim Abruf von Informationen im WWW- oder im WAP-fähigen Dienst aus einem Kommunikationssystem bzw. ein entsprechend geeignetes Kommunikationssystem

Das World Wide Web (WWW) ist ein Kommunikationsnetz, das den Abruf von Informationen mittels eines Internetprotokolls (IP), insbesondere des HTTP (Hyper Text Transfer Protocol) über das Internet ermöglicht. Die von einem Anwender gewünschte Information wird dabei durch eine Adresse, einen sogenannten URL (Unified Resource Locator) identifiziert. Der URL hat dabei die Form "http://www.server-name.domain/pfadname/dateiname.html" und wird bei einer Anforderung der Informationen unter dieser Adresse in einer Anfragenachricht (Request-Message) an den zuständigen HTTP-Server geschickt.

Die URL eines Dokuments beschreibt den Ort und bedingt auch die dortige Speicheradresse, wo das Dokument abgelegt ist. Dieser Ort kann eine Abhängigkeit mit der geographischen Position haben, für den die bereitgestellten Informationen gedacht sind. So wird man auf einem Server unter z.B. 'www.flughafen-muenchen.de/lh/flugangebot.htm' vor allem Informationen zu Flugdaten einer bestimmten Fluglinie bzw. Fluggesellschaft "LH" vom und zum Münchener Flughafen bekommen. Die Informationen sind dabei in einer von der Fluglinie erstellten Maske verfügbar gemacht. Unter der URL 'www.flughafen-muenchen.de/aua/flugplan.htm' sind die Angebote der Fluglinie "AUA" zu finden. Dabei können neben den hier beispielhaft interessierenden Flugdaten auch weitere Informationen zum Service angeboten werden. Außerdem werden die Informationen erfahrungsgemäß in einer anders aufgebauten Maske verfügbar gemacht.

Möchte ein Teilnehmer über seine Station - z.B. eine WAP-fähige Mobilstation (WAP: Wireless Application Protocol) oder seinen Personalcomputer (PC) - einen Flug buchen, so kann er mit einem ersten Ruf von einem solchen Server den dortigen Flugplan einer Fluglinie und deren Preise abrufen, wobei der Teilnehmer eine gewünschte Route eingeben muß. Möchte der Teilnehmer ein Angebot von einer anderen Fluglinie abrufen, so startet er einen zweiten Abfrageablauf. Um die Abfragen zu starten, muß der Teilnehmer die entsprechenden URLs der Fluglinien verfügbar haben.

Abhängig von den daraufhin angebotenen Flugdaten kann der Teilnehmer sich - in eigener Abstimmung mit seinem vorzugsweise elektronischen Terminplaner - für eine Fluglinie und einen bestimmten Flug entscheiden. Im Rahmen einer dritten Verbindung bucht der Teilnehmer einen Flug.

Für eine solche Prozedur muß der Teilnehmer somit eine Vielzahl von URLs kennen bzw. verfügbar haben, muß sich im Aufbau verschiedenster Masken verschiedener Anbieter zurechtfinden und muß außerdem nacheinander eine Vielzahl von Informations-Abrufen starten. Dies ist umständlich und zeitraubend.

Im Intra/Internet wird eine große Anzahl von weiteren Diensten unterschiedlichster Art angeboten. Oft ist es jedoch notwendig die Informationen verschiedener Dienste manuell zu kombinieren, um ein gewünschtes Endergebnis zu erhalten. Der WAP-WEB-Anwender muß alle diese Dienste kennen, mit der Handhabung aller dieser Dienste vertraut sein und diese kombinieren, um in einigermaßen vernünftiger Zeit zu einem Endergebnis zu gelangen.

Der Erfindung liegt die Aufgabe zugrunde, ein Verfahren bzw. ein Kommunikationssystem zum Bereitstellen von Abfrageabläufen beim Abruf von Informationen in einem Kommunikationsnetz, z.B. im WWW oder im WAP-Dienst bereitzustellen.

Diese Aufgabe wird durch das Verfahren mit den Merkmalen des Anspruchs 1 bzw. das Funk-Kommunikationssystem mit den Merkmalen des Anspruchs 15 gelöst.

Ein Verfahren zum Bereitstellen von Daten beim Abruf von Informationen aus einem Kommunikationssystem, bei dem eine Station aufgrund einer Anforderung durch einen Teilnehmer mittels einer Anweisung aus dem Kommunikationssystem Informationen anfordert, bei dem außerdem eine Systemeinrichtung zum Verarbeiten von Anweisungen Daten, die der Anforderung entsprechen, bereitstellt, und bei dem die Station die bereitgestellten Daten dem Teilnehmer in einer Antwort verfügbar macht, ermöglicht dadurch, daß die Systemeinrichtung zum Verarbeiten von Anweisungen nach dem Empfang der Anweisung in zwei oder mehr Abläufen jeweils einen Teil der entsprechenden Daten abruft, auswertet und entsprechend dem Ergebnis der Auswertung weitere Daten abruft, bis die angeforderte Information bereitstellbar ist, eine deutliche Vereinfachung komplexer Abfrageabläufe.

Der Teilnehmer muß im Idealfall nur die Adresse bzw. URL eines einzigen Dienstes wissen und nur einen einzigen Abruf von Informationen starten, um in einer komprimierten und vorausgewerteten Antwort alle erforderlichen Informationen zu erhalten.

Eine solche Information kann beispielsweise aufgrund einer Fluganfrage direkt die Bestätigung der Buchung eines bestimmten Fluges sein, wobei die Daten bereits mit dem eigenen elektronischen Terminkalender abgestimmt sein können.

Mit dieser Lösung werden somit insbesondere mehrere, aufeinanderfolgende Internetzugriffe, die vom Anwender erfolgen, aufeinander in Abhängigkeit gebracht. Alle Daten, die auch für spätere Internetzugriffe benötigt werden, werden zwischengespeichert und stehen den folgenden Transaktionen zur Verfügung.

Vorteilhafte Weiterbildungen sind Gegenstand von Unteransprüchen.

Eine Besonderheit des vorstehenden Verfahrens ist die Übertragbarkeit von Funktionen des Internets auf Funktionen der Telekommunikation.

Der WAP- und/oder WEB-Software-Agent nimmt dem Anwender diese komplizierten Vorgänge ab und agiert für den Einzeldienst als WAP/WEB-Client. Das bedeutet die Einzeldienste sind nicht beeinflußt und sind weiterhin als Einzeldienste nutzbar. Mittels der State/Event Maschine des WAP-WEB-Software-Agent werden die Abläufe und Zugriffe auf die Einzeldienste gesteuert.

Der WAP- oder WEB-Client kommuniziert ausschließlich mit dem WAP-WEB-Software-Agent. Das bedeutet für den Endnutzer, daß nur eine Anforderung an das Netz gesendet werden muß, alle notwendigen Zwischenschritte (Datenzugriffe, Datenspeicherung, Entscheidungen) automatisch durch den WWSA gesteuert werden können und nur eine Antwort vom Netz mit der bereits aufbereiteten Information an den Endnutzer zurückgesendet wird. Die Komplexität des Dienstes bleibt so dem Endnutzer verborgen, so daß die Bedienung einfach und übersichtlich bleibt.

Der Endnutzer entscheidet welche der angebotenen Dienstkombinationen er nutzen möchte. Das bedeutet für jeden Endnutzer ist ein Anwenderprofil vorhanden mit dem dieser individuelle Dienstkombinationen erstellen kann.

Vorteilhafterweise kann jegliche Information im Kommunikationsnetz, insbesondere im Internet verwendet und in Profile eingebunden werden. Dabei können verschiedene Informationen verschiedenster Datenquellen mit jeglichen anderen Informationen verknüpft werden. Applikationen und Merkmale können in Profilen beliebig neu erstellt, geändert oder entfernt werden. Die Anzahl der möglichen, kombinierbaren Dienste ist nahezu unbegrenzt.

Besonders vorteilhaft ist die Möglichkeit der Erzeugung neuer Applikationen bzw. Anwendungen durch Systemverwalter, während darauf aufbauende Profile vorteilhafterweise ohne großen Aufwand oder umfangreiche Programmierkenntnisse durch den Endanwender erstellt werden können.

Der WAP-WEB-Software-Agent ist Endgeräte unabhängig, erkennt die Möglichkeiten des Endgeräts und berücksichtigt diese auch in seinen Abläufen und bei der Darstellung der WAP-WEB-Seiten.

Nachfolgend wird ein Ausführungsbeispiel anhand der Zeichnung näher erläutert. Es zeigen:
- Fig. 1: schematisch ein Szenario für ein komplex aufgebautes Kommunikationssystem mit einer Koordinierungseinrichtung für komplexe Abfrageabläufe und
- Fig. 2: ein Ablaufdiagramm für einen beispielhaften Ablauf.

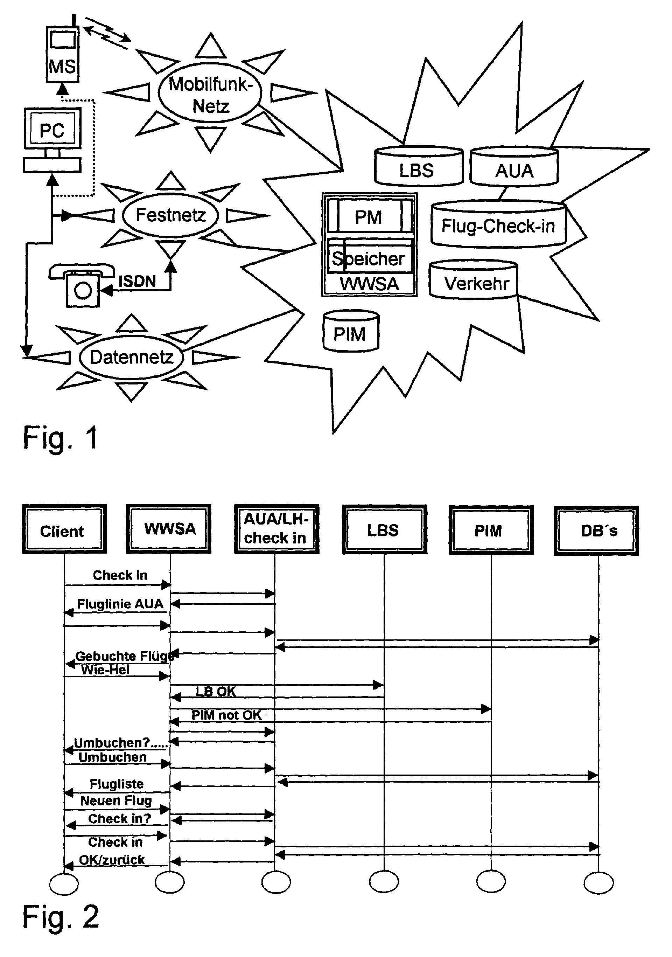

Das in Fig. 1 dargestellte Kommunikationssystem besteht aus einem Intra- oder Internet mit einer Vielzahl von Servern, auf denen Informationen abrufbar sind. Zum Teil können auch Aufträge - z.B. Flugbuchungen - an die Server bzw. die Betreiber einer dort gespeicherten Informationsseite übermittelt werden.

Zugriffe auf das Internet sind seitens eines Anwenders bzw. Teilnehmers über verschiedene Datenendeinrichtungen möglich. Eine erste Zugriffsmöglichkeit bietet sich z.B. über eine mobile oder stationäre Funk-Station (MS), die in Fig. 1 über ein Mobilfunknetz, z.B. ein GSM-, GPRS-, BCS1900- oder UMTS-Netz, und das damit verbundene Internet mit einem Server kommunizieren kann. Eine andere beispielhafte Zugriffsmöglichkeit auf einen solchen Server im Internet bietet sich von einem Computer aus an, der mit dem Internet über einen Festnetzanschluß oder ein Datennetz verbunden ist. Natürlich können auch andere Datenendstationen für eine Verbindung verwendet werden, z.B. ISDN-Telefone, Notebooks und Taschen-PCs.

Beim vorliegenden Ausführungsbeispiel sollen die Server bzw. die darüber zugreifbaren Informationen und Daten zwei Fluglinien-Server AUA bzw. LH, einen Terminplaner-Server PIM, einen Flug-check-in-Manager-Server, einen Ortsinformationsdienst LBS und einen Verkehrsinformationsdienst gehören. Der Terminplaner-Server PIM enthält die Termine eines ihm zugeordneten Teilnehmers und ist für diesen vorzugsweise über dessen Homepage bzw. Heimatseite zugreifbar. Der Ortsinformationsdienst LBS bietet einem Teilnehmer Informationen über seinen momentanen Aufenthaltsort. Der Verkehrsinformationsdienst bietet einem Teilnehmer Informationen über die Situation im Straßenverkehr seiner momentanen Aufenthaltsregion.

Außerdem ist im Internet eine Koordinierungseinrichtung bzw. Systemeinrichtung WWSA zum Verarbeiten von Anweisungen eingerichtet. Diese Systemeinrichtung WWSA ist beispielsweise als Schnittstelle zwischen einer WAP-fähigen Teilnehmer-Station MS oder PC und dem Internet ausgebildet ist und wird daher nachfolgend als WAP-WEB-Software-Agent (WWSA) bezeichnet. Im wesentlichen besteht ein solcher WAP-WEB-Software-Agent WWSA aus einem Speicher und einem Prozeßmanager in Form eines Software-Agenten oder eines speziell eingerichteten Dienstes.

Der WAP-WEB-Software-Agent WWSA nimmt dem Anwender bzw. Teilnehmer eine Vielzahl komplizierter und/oder aufwendiger Vorgänge ab. Beispielhafte Vorgänge sind nach einer Anforderung seitens eines Teilnehmers das Anwählen einer bestimmten URL, das Entnehmen einer bestimmten Information vom entsprechenden Server, das Analysieren und/oder Verarbeiten dieser Information und - abhängig vom Ergebnis der Verarbeitung - das anschließende Abrufen einer weiteren Information von diesem oder einem anderen Server. Nach dem Empfang und der Verarbeitung der empfangenen Informationen bzw. Daten können weitere Informationen abgerufen werden. Sobald alle angeforderten Informationen verfügbar sind, wird eine Antwort zusammengestellt, die dann dem Teilnehmer übermittelt wird.

Dabei ist der WAP-WEB-Software-Agent WWSA aus Sicht des Teilnehmers ein einzelner Dienst bzw. Server. Der Teilnehmer muß sich somit nicht eine Vielzahl einzelner Adressen merken, die nacheinander abgerufen werden müssen, sondern nur eine einzige Adresse des entsprechenden WAP-WEB-Software-Agent-Dienstes, die er anwählt.

Der WAP-WEB-Software-Agent WWSA ist vorzugsweise standardisiert aufgebaut, so daß sich der Teilnehmer auch nur ein Abfrageschema merken muß und nicht die Positionen der einzelnen abzurufenden Informationen, die unter den jeweiligen Serveradresse im Internet abrufbar sind. Die jeweilige Position der abzurufenden Daten auf einem Server merkt sich der WAP-WEB-Software-Agent WWSA. Sind beispielsweise Flugdaten von verschiedenen Fluglinien LH bzw. AUA abzurufen, so befinden sich diese bei der einen Fluglinie LH direkt auf der Heimatseite, während sich die Flugdaten bei der anderen Fluglinie AUA auf einer Unterseite befinden können.

Eine weitere Erleichterung für den Teilnehmer ergibt sich dadurch, daß der WAP-WEB-Software-Agent WWSA die abgerufenen Informationen in seinem Speicher je nach Bedarf zwischenspeichern, analysieren und verarbeiten kann.

Ein beispielhafter Ablauf ist anhand der Fig. 2 veranschaulicht. So kann der WAP-WEB-Software-Agent WWSA z.B. auf die Anforderung des Teilnehmers nach einem Flug von Wien nach Helsinki in zwei ersten Schritten die entsprechenden Informationen der Fluglinien LH und AUA abrufen und zwischenspeichern.

Diese Daten kann der WAP-WEB-Software-Agent WWSA dem Teilnehmer entweder zur Auswahl eines bevorzugten Fluges durch den Teilnehmer übermitteln (Fig. 2) oder aber alternativ auch direkt auswerten und je nach Voreinstellung oder Anforderung selber z.B. den preisgünstigsten oder den frühesten Flug wählen. Entsprechend der ausgewählten Daten geht der WAP-WEB-Software-Agent WWSA zu einem Buchungs-Server DB, über den der gewünschte Flug reserviert und/oder gebucht werden kann.

Mit diesen ausgewählten Daten im Speicher geht der WAP-WEB-Software-Agent WWSA zum Ortsinformationsdienst LBS, um den momentanen Aufenthaltsort des Teilnehmers zu ermitteln. Durch einen Abgleich der Daten des momentanen Ortes mit der Lage des Start-Flughafens ermittelt der WAP-WEB-Software-Agent WWSA die erforderliche Zeit, die der Teilnehmer zum Flughafen benötigen würde. Das Ergebnis gleicht er mit den Daten der verfügbaren Flüge ab. Im Fall einer zu geringen Zeit wählt er je nach vorheriger Anforderung durch den Teilnehmer automatisch einen späteren Flug oder läßt den Teilnehmer einen geeigneten späteren Flug auswählen.

In vergleichbarer Weise überprüft der WAP-WEB-Software-Agent WWSA die Einträge im Terminplaner-Server PIM des Teilnehmers, um Terminkollisionen auszuschließen. Im Fall einer Kollision wird der Teilnehmer informiert und um eine Anweisung gebeten werden, ob ein anderer Flugtermin gewählt werden soll oder ob der Termin verschoben werden soll, wie dies in Fig. 2 dargestellt ist. Natürlich kann auch diese Auswahl vollständig automatisiert werden. Jedoch sollte eine solche Auswahl im Gegensatz zu der einer bestimmten Fluglinie eher vom Teilnehmer erfolgen als automatisch vom WAP-WEB-Software-Agent WWSA.

In den nächsten Schritten wird für den Teilnehmer eine Flugliste erstellt die diesem direkt oder bei Bedarf auf seine Teilnehmer-Station MS bzw. PC übermittelt wird.

Befindet sich der Teilnehmer bereits auf dem Weg zum Flughafen, so kann der WAP-WEB-Software-Agent WWSA den Verkehrsinformationsdienst abrufen, um fortlaufend oder in zeitlichen Intervallen zu überprüfen, ob der gebuchte Flug noch erreicht werden kann. Für den Fall, daß sich ein Stau abzeichnet, kann eine Warnmeldung an den Teilnehmer ergehen, daß dieser einen anderen Weg wählt und/oder aber auch eine Umbuchung auf einen späteren Flug vorgenommen werden.

Insbesondere kann der WAP-WEB-Software-Agent WWSA einen entsprechend bereitgestellten Server bzw. eine entsprechende Netzseite auf einem solchen Server anwählen, über die ein Einchecken möglich ist. Auch davor kann optional eine vorherige Anfrage an den Teilnehmer erfolgen (Fig. 2). Nach dem erfolgreichen Einchecken wird dies dem Teilnehmer quittiert.

Aus dem vorstehenden ist ersichtlich, das der Teilnehmer vom WAP-WEB-Software-Agent WWSA je nach Automatisierungsgrad einen mehr oder weniger automatischen Ablauf für einen oder mehrere komplexe Vorgänge durchführen lassen kann. Dabei sind auch Zwischenabfragen bzw. Zwischenanweisungen berücksichtigbar. Der WAP-WEB-Software-Agent WWSA analysiert empfangene Daten und entscheidet selber über das weitere Vorgehen, insbesondere Meldungen oder Anfragen an den Teilnehmer bzw. dessen Station MS/PC oder aber den selbständigen Abruf weiterer Informationen aus dem Netz. Der Teilnehmer hat dadurch einen deutlich reduzierten Aufwand, da er letztendlich aus seiner Sicht nur mit einem einzigen Dienst oder einer reduzierten Anzahl von Diensten kommuniziert.

Für den einzelnen Dienst bzw. den einzelnen Server im Internet hingegen agiert der WAP-WEB-Software-Agent WWSA als WAP-WEB-Teilnehmer bzw. -Client. Das bedeutet, daß die Einzeldienste nicht beeinflußt sind und daher weiterhin als Einzeldienste nutzbar sind. Die Abläufe und Zugriffe auf die Einzeldienste werden mittels einer Zustands/Ereignis- bzw. State/Event-Maschine des WAP-WEB-Software-Agent WWSA gesteuert, die insbesondere den Speicher und den Prozeßmanager aufweist.

Weder der Teilnehmer bzw. dessen Station MS bzw. PC noch der Dienst im Netz merken, daß zwischen diesen eine zwischengeschaltete Einrichtung oder ein zwischengeschalteter Dienst in Form des WAP-WEB-Software-Agent WWSA existiert. Daher sind vorteilhafterweise keine Modifikationen an den Geräten des Teilnehmers und auch keine Modifikationen an den Geräten und Diensten des Netzes erforderlich.

Bei der dargestellten Ausführungsformen ist der WAP-WEB-Software-Agent WWSA als eigenständige serverartige Einrichtung bzw. als eigenständiger Dienst im Kommunikationsnetz, hier dem Internet eingerichtet (Fig. 2). Alternativ oder zusätzlich kann ein solcher WAP-WEB-Software-Agent WWSA bzw. ein entsprechender Dienst aber auch irgendwo anders im Kommunikationssystem eingerichtet sein, insbesondere direkt in einem bestehenden Server des Kommunikationsnetzes oder auch in einer Teilnehmer-Station PC bzw. MS. Die Einrichtung, in welcher der WAP-WEB-Software-Agent WWSA eingerichtet ist, sollte vorzugsweise WAP/HTML-Seiten empfangen, anzeigen und senden können. Natürlich sind auch andere geeignete Formate einsetzbar.

Je nachdem wo sich der WAP-WEB-Software-Agent WWSA im Kommunikationssystem befindet, ist er durch einen Systemoperator, Systemadministrator, Anbieter einer Heimatseite auf einem Server oder den Teilnehmer an seiner Teilnehmer-Station MS/PC einrichtbar. Der Teilnehmer kann somit ein bestehendes Profil auswählen oder aber auch ein eigenes Profil teilweise oder ganz selber erstellen.

Insbesondere ist durch einen solchen Aufbau des WAP-WEB-Software-Agent WWSA eine einfache Änderung von Profilen und Applikationen möglich. Das Zuschalten neuer oder bereits alter bestehender Applikationen und Dienste und deren Interaktion mit bestehenden Diensten ist dadurch ebenfalls möglich, wobei es vorteilhafterweise durch einen WWSA-Administrator erfolgt. Die Anzahl der möglichen, kombinierbaren Dienste ist entsprechend nahezu unbegrenzt.

Der WAP-WEB-Software-Agent WWSA greift dabei vorzugsweise nur auf die Masken der Server zu, also nur indirekt auf die dahinter liegenden Datenquelle bzw. Datenbanken. Der WAP-WEB-Software-Agent WWSA muß somit keine Kenntnis von dem speziellen Aufbau der Datenorganisation der Datenquelle des Servers haben.

Gemäß einer eigenständigen Ausführungsform werden vom WAP-WEB-Software-Agent WWSA neue Server bzw. Seiten ermittelt und analysiert. Paßt eine Seite in ein bisheriges Grundkonzept, z.B. eine Seite einer neuen Fluglinie XX, so werden diese und deren Unterseiten nach den für bestimmte Profile relevanten Daten durchsucht, um deren Position zu ermitteln. Bei komplexeren Seiten oder Aufgaben, wird eine entsprechende Unterstützung von einem Operator angefordert. Wird eine zu einem bestehenden Profil passende neue Seite gefunden, so kann sie mit in das bestehende Profil integriert werden. Beim vorstehenden Beispiel würde zukünftig zusätzlich auch der Flugplan der Fluglinie XX mit abgefragt.

Auf diese und die nachfolgend beschriebene Art ist es möglich, ein lernfähiges Analyseprogramm zum Aufbereiten von Daten neuer Internetseiten zu erstellen. Beim Analysieren von für den WAP-WEB-Software-Agent WWSA neuen Seiten merkt sich dieser, an welchen Stellen Daten auf einer Seite eingefügt und/oder gelesen werden und welche Zusammenhänge zwischen diesen Stellen und anderen Anwendungen bestehen, die bereits durch den WAP-WEB-Software-Agent WWSA gesteuert werden.

Ferner ist eine Daten-Sammelfunktion für den WAP-WEB-Software-Agent WWSA einsetzbar. Dazu füllt der WAP/WEB-Client bzw. -Anwender eine Liste mit allen erforderlichen WAP/WEB-Dienstedaten in der geeigneten WAP-WEB-Software-Agent-Seite aus. Diese Liste führt zu mehreren WAP/WEB-Applikationszugriffen bzw. WAP/WEB-Anwendungszugriffen durch den WAP-WEB-Software-Agent WWSA. Eine Antwort mit allen Daten wird an den WAP/WEB-Teilnehmer zurückgesendet. Diese Antwort an den Teilnehmer kann auch zeitlich durch Zeitgeberereignisse getriggert werden. Dies ermöglicht dem Anwender, seine Daten zu einer von ihm gewünschten Zeit zu empfangen. Eine solche Sammlung von Daten in einer Antwort kann z.B. zur Frühstückszeit zusammengestellt und empfangen werden und Daten wie den Wetterbericht und bestimmte Aktienkurse enthalten. Zwar haben diese Daten keinen direkten Daten-Zusammenhang, wie die Daten bei der vorstehend beschriebenen Buchung eines Fluges, jedoch werden auch diese Daten Teilnehmer-bezogen aktuell zusammengestellt und abhängig von einem Ereignis, hier einer Tageszeit, zusammengestellt und an den Teilnehmer übermittelt.

Auch mit dieser Lösung werden mehrere, aufeinanderfolgende Internetzugriffe, die vom Teilnehmer erfolgen, aufeinander in Abhängigkeit gebracht. Auch hier werden alle Daten, die auch für spätere Internetzugriffe benötigt werden, zwischengespeichert und stehen den folgenden Transaktionen zur Verfügung. Der Teilnehmer spart wiederum Zeit und Kosten durch einen einzigen Abruf bzw. eine einzige Übermittlung anstelle einer Vielzahl von Abrufen. Letztendlich ist dies vorteilhaft für Teilnehmer und Netzbetreiber.

In einer besonders bevorzugten Ausführungsform erkennt der WAP-WEB-Software-Agent WWSA den Gerätetyp der mit ihm kommunizierenden Teilnehmer-Station MS/PC. Je nach Gerätetyp bereitet der WAP-WEB-Software-Agent WWSA die Antwort geeignet auf. So kann einer mobilen Teilnehmer-Station MS mit einer einfachen einzeiligen Textanzeige eine Textnachricht übermittelt werden, während an eine Teilnehmer-Station PC mit einem graphikfähigen Display zusätzlich eine Straßenkarte für die günstigste Anfahrtsstrecke zum Flughafen übermittelt wird.

Gemäß weiterer Ausführungsformen können auch die Termine verschiedener Teilnehmer an einem Treffen sowie der Treffpunkt vom WAP-WEB-Software-Agent WWSA koordiniert werden. Dazu greift dieser z.B. auf die Terminplaner-Server PIM der einzelnen Teilnehmer und einen Orts-Server mit freien Tagungsstätten zu.

Die Terminplaner PIM können sich dabei auch direkt als Programm bzw. Datei auf der Teilnehmer-Station MS bzw. PC befinden, wobei optional eine Aktualisierung und ein Abgleich der Daten des Terminplaners über das Internet möglich sind.

Ferner ist es vorteilhafterweise auch möglich, eine Liste verschiedener Daten zusammenstellen und zu einer bestimmten Tageszeit an den Teilnehmer übermitteln zu lassen. So können morgens Wetter-, Straßenverkehrsdaten und Sportnachrichten in einer einzigen Meldung kompakt bereitgestellt werden.

## Patentansprüche

1. Verfahren zum Bereitstellen von Daten beim Abruf von Informationen aus einem Kommunikationssystem, bei dem
- eine Station (MS, PC) aufgrund einer Anforderung, insbesondere Teilnehmer-Anforderung, mittels einer Anweisung aus dem Kommunikationssystem zumindest eine Informationen anfordert,
- eine Systemeinrichtung zum Verarbeiten von Anweisungen Daten, die der Anforderung entsprechen, bereitstellt,
- die Station die bereitgestellten Daten dem Teilnehmer in einer Antwort verfügbar macht,
**dadurch gekennzeichnet,**
**daß** die Systemeinrichtung (WWSA) zum Verarbeiten von Anweisungen nach dem Empfang der Anweisung in zwei oder mehr Abläufen jeweils einen Teil der entsprechenden Daten abruft, auswertet und entsprechend dem Ergebnis der Auswertung weitere Daten abruft, bis die angeforderte Information bereitstellbar ist.

2. Verfahren nach Anspruch 1, bei dem
die Systemeinrichtung (WWSA) zum Verarbeiten von Anweisungen die Daten eigenständig aus einem Kommunikationsnetz abruft, insbesondere einem Internet oder Intranet.

3. Verfahren nach Anspruch 1 oder 2, bei dem
die Station (MS, PC) die Anforderung in einem WAP- oder WEB-Datenformat an die Systemeinrichtung (WWSA) zum Verarbeiten von Anweisungen sendet.

4. Verfahren nach einem vorstehenden Anspruch, bei dem
die Station mit der Systemeinrichtung (WWSA) zum Verarbeiten von Anweisungen wie mit einem Kommunikationsnetz-Server kommuniziert.

5. Verfahren nach einem vorstehenden Anspruch, bei dem
die Systemeinrichtung (WWSA) zum Verarbeiten von Anweisungen wie die Station (MS, PC) mit einem Kommunikationsnetz-Server kommuniziert.

6. Verfahren nach einem vorstehenden Anspruch, bei dem
die Systemeinrichtung (WWSA) zum Verarbeiten von Anweisungen abgerufene Informationen bei späterem Bedarf in einem Speicher zwischenspeichert.

7. Verfahren nach einem vorstehenden Anspruch, bei dem
die Systemeinrichtung (WWSA) zum Verarbeiten von Anweisungen für einen Abgleich Daten des momentanen Ortes ermittelt.

8. Verfahren nach einem vorstehenden Anspruch, bei dem
die Systemeinrichtung (WWSA) zum Verarbeiten von Anweisungen nach einer Analyse empfangener Daten eine Zwischenanfrage an die Station (MS, PC) sendet.

9. Verfahren nach einem vorstehenden Anspruch, bei dem
die Systemeinrichtung (WWSA) zum Verarbeiten von Anweisungen Anweisungen gemäß einem frei erstellbaren Anweisungs-Profil abarbeitet.

10. Verfahren nach einem vorstehenden Anspruch, bei dem
die Systemeinrichtung (WWSA) zum Verarbeiten von Anweisungen ohne Kenntnis von der Datenorganisation der Datenquelle auf die Masken von Servern zugreift.

11. Verfahren nach einem vorstehenden Anspruch, bei dem
die Systemeinrichtung (WWSA) zum Verarbeiten von Anweisungen neue Informationsquellen in bestehende Anweisungs-Profile automatisch einfügt.

12. Verfahren nach einem vorstehenden Anspruch, bei dem
die Systemeinrichtung (WWSA) zum Verarbeiten von Anweisungen als auszuwertendes Ereignis eine aktuelle Zeit- und/oder Datumsinformation verwendet.

13. Verfahren nach einem vorstehenden Anspruch, bei dem
die Systemeinrichtung (WWSA) zum Verarbeiten von Anweisungen die angeforderte Information in einer an den Gerätetyp der mit ihr kommunizierenden Station (MS, PC) angepaßten Form übermittelt.

14. Verfahren nach einem vorstehenden Anspruch, bei dem
die Systemeinrichtung (WWSA) zum Verarbeiten von Anweisungen Termine verwaltet und/oder organisiert.

15. Kommunikationssystem zum Bereitstellen von Daten beim Abruf von Informationen aus einem Kommunikationssystem, insbesondere durch Durchführen eines Verfahrens nach einem vorstehenden Anspruch,
- wobei das Kommunikationssystem zumindest ein Kommunikationsnetz, eine Vielzahl von Stationen (MS, PC) und zumindest eine Systemeinrichtung zum Verarbeiten von Anweisungen aufweist,
- wobei die Systemeinrichtung zum Verarbeiten von Anweisungen Daten aufgrund einer Anforderung seitens eines Teilnehmers und zum Bereitstellen einer entsprechenden Antwort an den Teilnehmer ausgebildet ist,
**dadurch gekennzeichnet,**
**daß** die Systemeinrichtung zum Verarbeiten von Anweisungen (WWSA)
- zumindest einen Speicherbereich zum Zwischenspeichern von entsprechend der Anforderung abgerufenen und insbesondere verarbeiteten Daten und
- zumindest eine Verarbeitungseinrichtung (PM) zum Abrufen von Daten aus dem Kommunikationssystem und zum Verarbeiten der abgerufenen Daten und zum Abrufen und Verarbeiten weiterer Daten entsprechend dem Ergebnis der vorherigen Verarbeitung bis zum Bereitstellen der angeforderten Antwort aufweist.

16. Kommunikationssystem nach Anspruch 15, bei dem
das Kommunikationssystem aus einem Intranet oder Internet mit einer Vielzahl von Servern besteht, auf denen Informationen abrufbar sind.

17. Kommunikationssystem nach Anspruch 15 oder 16, bei dem die Systemeinrichtung (WWSA) zum Verarbeiten von Anweisungen als Schnittstelle zwischen einer WAP- und/oder WEB-fähigen Teilnehmer-Station (MS; PC) und insbesondere paketorientierten Stationen in einem Kommunikationsnetz ausgebildet ist.

18. Funk-Station (MS), die mit einem Kommunikationssystem verbunden ist und eine Systemeinrichtung zum Verarbeiten von Anweisungen (WWSA) nach einem der Ansprüche 15 bis 17 aufweist.

19. Computer (PC), der mit einem Kommunikationssystem verbunden ist und eine Systemeinrichtung zum Verarbeiten von Anweisungen (WWSA) nach einem der Ansprüche 15 bis 17 aufweist.
